# EUROPÄISCHE PATENTSCHRIFT

(11) **EP 1 202 043 B1**
(45) Veröffentlichungstag und Bekanntmachung des Hinweises auf die Patenterteilung: **09.02.2011**
(21) Anmeldenummer: 00126446.4
(22) Anmeldetag: 06.12.2000
(51) Int. Cl.: G01N 21/21, G01N 21/25, G02F 1/1347

(54) **Fotoelektrische Messvorrichtung**
Fotoelectric measuring device
Appareil de mesure photoélectrique

(30) Priorität: 26.10.2000 IT BZ000044
(43) Veröffentlichungstag der Anmeldung: 02.05.2002
(73) Patentinhaber: X-Rite, Incorporated, Grand Rapids, MI 49512 (US)
(72) Erfinder: Pallingen, Hans, 39042 Brixen (IT)
(74) Vertreter: Schwabe - Sandmair - Marx

(56) Entgegenhaltungen:
- AU-B1- 3 904 689
- CH-A- 532 261
- DE-A- 19 530 185
- JP-A- 02 189 408
- US-A- 4 670 744
- US-A- 5 469 279
- US-A- 5 892 612

## Beschreibung

Die Erfindung betrifft eine Messvorrichtung zur fotoelektrischen Ausmessung eines Messobjekts gemäß dem Oberbegriff des unabhängigen Anspruchs 1. Insbesondere betrifft die Erfindung ein Densitometer oder ein Farbmessgerät.

Densitometrische Meßgeräte und -systeme sind häufig mit Polarisationsfiltern ausgestattet. Bei Messungen mit Polarisationsfilter ergibt sich ein geringerer Farbdichterückgang während der Trocknung der Druckfarbe und ein erweiterter Bereich, über welchen die Farbdichte mit der Schichtdicke der Druckfarbe linear zusammenhängt. Wenn das Messergebnis zur Maschinensteuerung im Druck dient, hat der Drucker ein grosses Interesse möglichst lange, bevor die Farbe getrocknet ist, schon Messwerte zu erhalten, um Ausschuss einzuschränken. Dazu ist eine Polarisationseinrichtung notwendig.

Nasse Druckfarben haben eine glänzende Oberfläche, beim Trocknen passt sich die Druckfarbe der Oberflächenstruktur des Papiers an und wird abhängig von der Papierqualität mehr oder weniger matt. Daraus ergeben sich unterschiedliche Messergebnisse vor und nach dem Trocknen. Sinn der Polarisationsfilter ist es, die Oberflächenspiegelung des nassen Drucks zu unterdrücken. Dazu werden zwei Polarisationsfilter verwendet. Der erste Polarisationsfilter liegt im Strahlengang der Lichtquelle und lässt so nur eine Schwingungsebene durch. Diese ausgerichteten Lichtstrahlen werden von der Farboberfläche teilweise spiegelnd reflektiert, ohne dass sich die Schwingungsebene ändert. Ein zweiter Polarisationsfilter liegt im Strahlengang des Sensors und ist bezüglich des ersten Filters um 90° gedreht, sodass die auf einer glatten Oberfläche reflektierten polarisierten Lichtstrahlen diesen zweiten Polarisationsfilter nicht passieren können oder zumindest nur teilweise von diesem zweiten Polarisationsfilter durchgelassen werden. Somit wird der vom Oberflächenglanz herrührende Lichtanteil stark oder ideal ganz unterdrückt, und der Sensor misst im wesentlichen nur den unpolarisierten Lichtanteil.

Bei farbmetrischen Meßsystemen bezieht sich der Messwert auf das menschliche Auge. Da Messungen mit Polarisationsfiltern nicht mit dem Eindruck des Beobachters korrelieren, schreiben die Normen Farbmessungen ohne Polarisationsfilter vor.

Viele moderne Messgeräte bieten beide Messmöglichkeiten, nämlich Dichtemessungen und farbmetrische Messungen, z.B. gemäß CIEL*a*b* oder CIEL*u*v*.

Die JP 02-189 408 A beschreibt eine Klebeband-Detektionsvorrichtung, um ein Klebeband zu detektieren. Die Klebeband-Detektionsvorrichtung weist einen variablen Filter auf.

Die DE 195 30 185 A beschreibt eine Farbmesseinrichtung fiir den Offsetdruck.

Die US-5,892,612 A und US-5,469,279 A beschreiben Lichtschalter, bei denen einfallendes Licht entweder gesperrt bzw. absorbiert (dunkel) oder (teilweise) durchgelassen (hell) wird.

Die CH 659 135 A beschreibt ein Verfahren und Vorrichtung zur Eichung eines mit Polarisatoren ausgerüsteten Densitometers.

Die AU-39046/89 B beschreibt eine Messvorrichtung sowohl zum densitometrischen als auch zum farbmetrischen Ausmessen eines Messobjekts mit einem einzelnen optischen Messkopf, der beide Messungen mit vom Messobjekt in einer einzigen Richtung kommendem Licht ermöglicht.

### ZUSAMMENFASSUNG DER ERFINDUNG

Ausgehend von diesem Stand der Technik soll durch die vorliegende Erfindung eine Messvorrichtung der gattungsgemäßen Art dahingehend verbessert werden, dass die Ausfilterung des Glanzlichtanteils rein elektronisch, d.h. ohne mechanische Bewegung von Polarisationsfiltern oder anderen Komponenten der Messvorrichtung aktiviert bzw. deaktiviert werden kann.

Die Lösung dieser der Erfindung zugrundeliegenden Aufgaben ergibt sich durch die erfindungsgemäße Messvorrichtung gemäß den kennzeichnenden Merkmalen des unabhängigen Anspruchs 1. Besonders zweckmäßige und vorteilhafte Ausgestaltungen sind Gegenstand der abhängigen Ansprüche.

Gemäß dem grundlegenden Hauptaspekt der vorliegenden Erfindung ist also wenigstens einer der beiden Polarisationsfilter elektronisch steuerbar ausgebildet und wird von der Steuerelektronik mit passenden Steuerspannungen beaufschlagt. Dadurch kann die Drehung der Polarisationsebene und damit die Aktivierung bzw. Deaktivierung der Glanzunterdrückung durch Anlegen geeigneter elektrischer Signale auf rein elektronischem Wege sehr einfach und schnell erfolgen.

Im folgenden wird die Erfindung anhand der Zeichnung näher erläutert. Es zeigen:
- Fig. 1: ein Prinzipschema eines typischen Ausführungsbeispiels der erfindungsgemässen Messvorrichtung und
- Fig. 2: einen schematischen Schnitt durch einen Polarisationsfilter der Messvorrichtung der Figur 1.

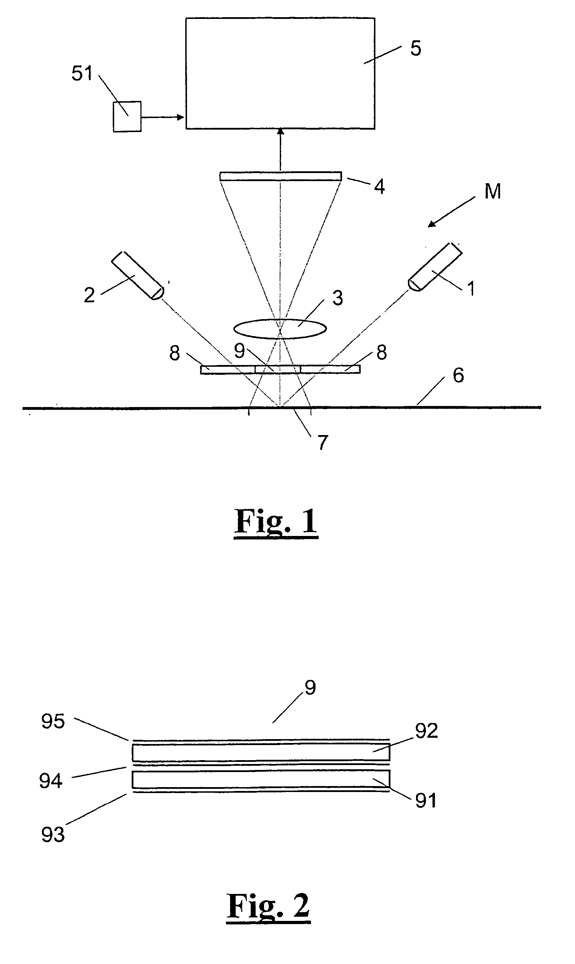

Die in Fig. 1 als Ganze mit M bezeichnete Messvorrichtung ist als Remissionsmessgerät ausgebildet und umfasst in an sich bekannter Weise eine aus (im Beispiel zwei) Lampen 1 und 2 bestehende Lichtquelle, ein Messobjektiv 3, einen fotoelektrischen Sensor 4 und eine Steuerelektronik 5. Ferner ist zwischen den Lampen 1 und 2 und dem auszumessenden Messobjekt 6 ein erster Polarisationsfilter 8 und zwischen dem Messobjekt 6 und dem Messojektiv 3 ein zweiter Polarisationsfilter 9 vorgesehen. Wie bei Messgeräten dieser Art üblich, beleuchten die Lampen 1 und 2 über den ersten Polarisationsfilter 8 ein Messfeld 7 eines auszumessenden Messobjekts 6 unter 45°, und das Messobjektiv 3 fängt das vom Messobjekt remittierte und vom zweiten Poalrisationsfilter 9 durchgelassene Messlicht unter 0° auf und beaufschlagt damit den Sensor 4. Die Steuerelektronik 5 wandelt die vom Sensor 4 erzeugten, der Intensität des empfangenen Lichts entsprechenden analogen elektrischen Signale in entsprechende digitale Messwerte um und berechnet daraus dann die gewünschten Messgrössen oder stellt die digitalen Messwerte einem externen Rechner zur weiteren Verarbeitung zur Verfügung.

Soweit entspricht die erfindungsgemäße Messvorrichtung herkömmlichen Messvorrichtungen dieser Art, so dass der Fachmann diesbezüglich keiner näheren Erläuterung bedarf.

Der erfindungswesentliche Unterschied zum Stand der Technik besteht in der Ausbildung des bzw. der Polarisationsfilter 8 und/oder 9. Mindestens einer der beiden Polarisationsfilter 8 und 9, im gezeigten Beispiel der zweite Polarisationsfilter 9, ist gemäss der Erfindung als elektronisch steuerbarer Polarisationsfilter ausgebildet. Er ist dazu durch eine oder mehrere polarisierende Flüssigkristallschichten realisiert, deren Polarisationsebene unter dem Einfluss eines elektrischen Felds um 90° gedreht werden kann. Geeignete Flüssigkristalle und Technologien sind z.B. solche, wie sie in den bekannten Flüssigkristallanzeigen (Liquid Crystal Diplay, LCD) verwendet werden. Besonders geeignet sind sog. Twisted Nematic Flüssigkristalle, weil sie die Polarisationsebene bei Anliegen einer elektrischen Spannung um genau 90° drehen.

Die Steuerelektronik 5 stellt die für die Ansteuerung des zweiten Polarisationsfilters 9 erforderliche Steuerspannung zur Verfügung. Auf diese Weise kann die Drehung der Polarisationsebene und damit die Aktivierung bzw. Deaktivierung der Glanzunterdrückung durch Anlegen geeigneter elektrischer Signale auf rein elektronischem Wege sehr einfach und schnell erfolgen. Die Umschaltung kann dabei manuell über Bedienungsknöpfe 51 oder programmgesteuert ausgelöst werden.

Ein wesentliches Kriterium der Qualität der Polarisation ist, wie stark der (polarisierte) Lichtanteil, der nicht in der Polarisationsebene des zweiten Polarisationsfilters 9 liegt, unterdrückt wird. Um die Qualität des Flüssigkristall-Polarisationsfilters 9 diesbezüglich zu erhöhen, kann der Polarisationsfilter 9 dazu zwei oder mehrere hintereinandergeschaltete Flüssigkristallschichten aufweisen, wie dies anhand der schematischen Schnittdarstellung der Figur 2 verdeutlicht ist.

Der zweite Polarisationsfilter 9 umfasst hier zwei Flüssigkristallschichten 91 und 92, die zwischen drei transparenten Elektroden 93-95 eingeschlossen sind. Die drei Elektroden sind an dei Steuerelektronik 5 angeschlossen und werden von dieser in an sich bekannter Weise mit passenden Schaltspannungen beaufschlagt.

Durch Ergänzung um farbselektive und/oder spektral auflösende optische Komponenten kann die gezeigte Messvorrichtung in an sich bekannter Weise als Densitometer oder Farbmessgerät ausgebildet werden.

## Patentansprüche

1. Gerät zum densitometrischen und farbmetrischen Ausmessen eines Messobjekts, mit einer Lichtquelle (1,2) zur Beaufschlagung des Messobjekts (6) mit Messlicht, mit einem zwischen der Lichtquelle (1,2) und dem Messobjekt (6) angeordneten Polarisationsfilter (8), einem fotoelektrischen Sensor (4), einem zwischen dem Messobjekt (6) and dem fotoelektrischen Sensor (4) befindlichen zweiten Polarisationsfilter (9), einem Messobjektiv (3), welches das von einem Messfleck des Messobjekts (6) ausgehende Messlicht über den zweiten Polarisationsfilter (9) auf den Sensor (4) leitet, und mit Mitteln, um die Polarisationsebene eines der beiden Polarisationsfilter relativ zur derjenigen des anderen der beiden Polarisationsfilter im wesentlichen um 90° zu verdrehen, sowie mit einer mit dem Sensor (4) zusammenarbeitenden Steuerelektronik (5) zur Verarbeitung der von diesem erzeugten elektrischen Signale, wobei wenigstens einer der beiden Polarisationsfilter (8,9) elektronisch steuerbar ausgebildet ist, wobei seine Polarisationsebene durch die Steuerelektronik (5) verdrehbar ist und wobei
wenigstens einer der beiden Polarisationsfilter (8,9) als polarisierendes Medium mindestens eine Flüssigkristallschicht (91,92) aufweist, deren Polarisationsebene unter dem Einfluss eines elektrischen Felds um vorzugsweise 90° gedreht werden kann.

2. Gerät nach Anspruch 1, wobei die mindestens eine Flüssigkristallschicht aus sog. verdrehten nematischen Flüssigkristallen ("Twisted Nematic Liquid Crystals") besteht.

3. Gerät nach einem der vorangehenden Ansprüche, wobei nur der zwischen dem Messobjekt (6) and dem Sensor (4) befindliche zweite Polarisationsfilter (9) elektronisch steuerbar ausgebildet ist.

## Claims

1. An instrument for the densitometric and colorimetric measurement of an object to be measured, with a light source (1, 2) for acting upon the object to be measured (6) with measuring light, with a polarization filter (8) arranged between the light source (1, 2) and the object to be measured (6), a photoelectric sensor (4), a second polarization filter (9) situated between the object to be measured (6) and the photoelectric sensor (4), a measuring lens (3) which conveys the measuring light starting from a measurement spot of the object to be measured (6) to the sensor (4) by way of the second polarization filter (9), and with means to rotate the polarization plane of one of the two polarization filters substantially through 90° relative to that of the other one of the two polarization filters, and with an electronic control means (5) co-operating with the sensor (4) for processing the electrical signals produced by the latter, wherein at least one of the two polarization filters (8, 9) is designed so as to be controllable electronically, wherein the polarization plane thereof is capable of being rotated by the electronic control means (5), and wherein at least one of the two polarization filters (8, 9) has a polarizing medium in the form of at least one liquid-crystal layer (91, 92), the polarization plane of which can be rotated through preferably 90° under the influence of an electrical field.

2. An instrument according to claim 1, wherein the at least one liquid-crystal layer comprises so-called twisted nematic liquid crystals.

3. An instrument according to one of the preceding claims, wherein only the second polarization filter (9) situated between the object to be measured (6) and the sensor (4) is designed so as to be controllable electronically.

## Revendications

1. Dispositif pour la mesure densitométrique et colorimétrique d'un objet de mesure, avec une source lumineuse (1,2) pour l'excitation de l'objet de mesure (6) avec une lumière de mesure, avec un filtre de polarisation (8) disposé entre la source lumineuse (1, 2) et l'objet de mesure (6), un capteur photoélectrique (4), un deuxième filtre de polarisation (9) se trouvant entre l'objet de mesure (6) et le capteur photoélectrique (4), un objectif de mesure (3), lequel conduit la lumière de mesure provenant d'une tâche de mesure de l'objet de mesure (6) à travers le deuxième filtre de polarisation (9) jusqu'au capteur (4), et avec des moyens pour tourner sensiblement de 90 ° le plan de polarisation de l'un des deux filtres de polarisation par rapport à celui de l'autre des deux filtres de polarisation, ainsi qu'avec une électronique de commande (5) coopérant avec le capteur (4) pour le traitement des signaux électriques produits par celui-ci, au moins un des deux filtre de polarisation (8, 9) étant formé apte à être commandé électroniquement, son plan de polarisation pouvant être tourné au moyen de l'électronique de commande (5) et au moins l'un des deux filtre de polarisation (8, 9) comportant comme milieu polarisant au moins une couche de cristal liquide (91, 92), dont le plan de polarisation peut être tourné de préférence de 90 ° sous l'influence d'un champ électrique.

2. Dispositif selon la revendication 1, dans lequel la au moins une couche de cristal liquide se composant de cristaux liquides nématiques en hélice (« Twisted Nematic Liquid Crystals »).

3. Dispositif selon l'une des revendications précédentes, dans lequel seul le deuxième filtre de polarisation (9) se trouvant entre l'objet de mesure (6) et le capteur (4) étant formé apte à être commandé électroniquement.
